# EUROPEAN PATENT SPECIFICATION

(11) **EP 1 916 398 B1**
(45) Date of publication and mention of the grant of the patent: **27.05.2009**
(21) Application number: 07018408.0
(22) Date of filing: 19.09.2007
(51) Int. Cl.: F02B 77/13, F16F 7/08

(54) **Vibration damping member**
Vibrationsdämpfendes Element
Élément d'amortissement de vibration

(30) Priority: 24.10.2006 JP 2006288394
(43) Date of publication of application: 30.04.2008
(73) Proprietor: HONDA MOTOR CO., LTD., Tokyo 107-8556 (JP)
(72) Inventor: Imai, Takahiro, Wako-shi Saitama 351-0193 (JP); Ueda, Hirofumi, Wako-shi Saitama 351-0193 (JP); Murakami, Osamu, Wako-shi Saitama 351-0193 (JP)
(74) Representative: Herzog, Markus

(56) References cited:
- FR-A- 2 317 500
- US-A- 3 102 722
- US-A- 5 233 832
- US-A1- 2004 188 165

## Description

### TECHNICAL FIELD

The present invention relates to a technology for achieving effective reduction of radiated sound from a vibrating member by means of a simple and low-cost structure, and particularly relates to a vibration damping member to be attached to a vibrating member of a motor vehicle engine to suppress the vibration and reduce the radiated sound.

### BACKGROUND OF THE INVENTION

Motor vehicle engines are provided with various covers and the like such as a cam chain cover, oil pan, head cover, etc., and these covers often consist of a thin-wall molded product made of an aluminum alloy or steel plate and can resonate with crank vibrations or the like to radiate sounds. Conventionally, in order to reduce such sound radiation, it has been proposed to dispose a sound absorbing and vibration damping member made of glass wool or rubber on an inside of a timing belt cover to reduce the vibration transmitted from the engine main body to the timing belt cover (see Japanese Utility Model Application Publication No. 62-64852), or to arrange a relatively thin vibration damping plate having radially extending arms or having a plurality of pores inside a head cover of a horizontal opposed cylinder engine so that the vibration damping plate stirs the engine oil to absorb the vibration energy (Japanese Patent Application Publication No. 2002-276733).

However, according to the technique of Utility Model Application Publication No. 62-64852, because the glass wool or rubber has a low relative density, the sound absorbing and vibration damping member need to be large to achieve a satisfactory level of vibration absorption or damping, and this can make it difficult to ensure a sufficient installation space. On the other hand, according to the technique of Patent Application Publication No. 2002-276733, when the technique is applied to the cam chain cover, head cover or the like of a vertical engine, the vibration damping plate cannot be immersed in the engine oil and therefore it is difficult to reduce the vibration. For these reasons, the present inventors tried attaching a vibration damping plate made of a relatively thick steel plate to the front side of the cam chain cover to thereby increase the mass of the cam chain cover. However, according to this technique, though the resonance frequency was lowered, the vibration damping effect was small and effective reduction of vibration was not achieved.

In US 2004/188165 A1, on which the preamble of claim 1 is based, the steel damping plates are mounted directly onto the cam chain cover (vibrating member) and no seal member in interposed therebetween. There, the rivets integrally protrude from the vibrating member for directly fixing the stack damping plates thereon.

US-A-5233832 shows a heat shield with inner and outer steel layers commonly coated by a silicon layer. The sealing extends between the stacked damping plates and between the stacked damping plates and the vibrating member. No rivets are shown, but bolts are shown screwed into the mounting bosses are penetrating holes of the seal, so that the sealing will not be able to isolate the bolts from the vibrating member. The same applies to FR-A-2317500, which shows seal profiles or sealing rings.

In US-A-312722, no seal member is shown.

### BRIEF SUMMARY OF THE INVENTION

The present invention was made to solve the above prior art problems, and a primary object of the present invention is to provide a combination of vibration damping member and a vibrating member that has a simple and low-cost structure and can achieve effective reduction of sound radiated from a vibrating member while avoiding corrosion.

According to the present invention, there is provided combination of a vibration damping member and a vibrating member in accordance with claim 1.

According to such a structure, when the vibration damping member vibrates with the vibrating member, the plurality of plate members of the vibration damping member move relative to each other and engage each other to consume the vibration energy, to thereby suppress the vibration and reduce the sound radiated from the vibrating member.

As the plurality of plate members and vibrating member are made of different metallic materials, the vibration damping member is attached to the vibrating member via a seal member made of a resin material. In this way, it is possible to prevent bimetallic corrosion (galvanic corrosion).

Preferably, adjoining ones of the plurality of plate members are in close contact to each other. In this way, when the vibration damping member vibrates with the vibrating member, the plurality of plate members of the vibration damping member slide relative to each other in a direction substantially perpendicular to the stacking direction of the plurality of plate members so that the vibration energy is consumed by the friction between the sliding surfaces of adjoining steel plates as heat energy. Thus, the vibration can be effectively suppressed and the sound radiated from the vibrating member can be reduced.

Further preferably, the adjoining ones of the plurality of plate members are pressed upon each other in a stacking direction. This can increase the friction between the sliding adjoining plate members so that the vibration energy consumed by the friction as heat can be increased and thus the vibration can be suppressed even more effectively.

Other and further objects, features and effects of the present invention will appear more fully from the following description with reference to accompanying drawings.

### BRIEF DESCRIPTION OF THE DRAWINGS

Now the present invention is described in the following with reference to the appended drawings, in which:
Figure 1 is a front view of an engine attached with a vibration damping member according to an embodiment of the present invention;
Figure 2 is a perspective view of the vibration damping member shown in Figure 1;
Figure 3 is a longitudinal cross-sectional view of a part of the vibration damping member of Figure 1, showing a structure for holding together three plate members that constitute the vibration damping member;
Figure 4 is a longitudinal cross-sectional view of a part of the vibration damping member of Figure 1, showing a structure for attaching the vibration damping member to a vibrating member (cam chain cover);
Figure 5 is an explanatory view for showing the function of the vibration damping member shown in Figure 1;
Figure 6 is a graph of inertance characteristics with respect to frequency for showing vibration damping effects of the vibration damping member shown in Figure 1; and
Figure 7 is a graph of radiated sound characteristics with respect to frequency for showing radiated sound suppressing effects of the vibration damping member shown in Figure 1.

### DETAILED DESCRIPTION OF THE PREFERRED EMBODIMENTS

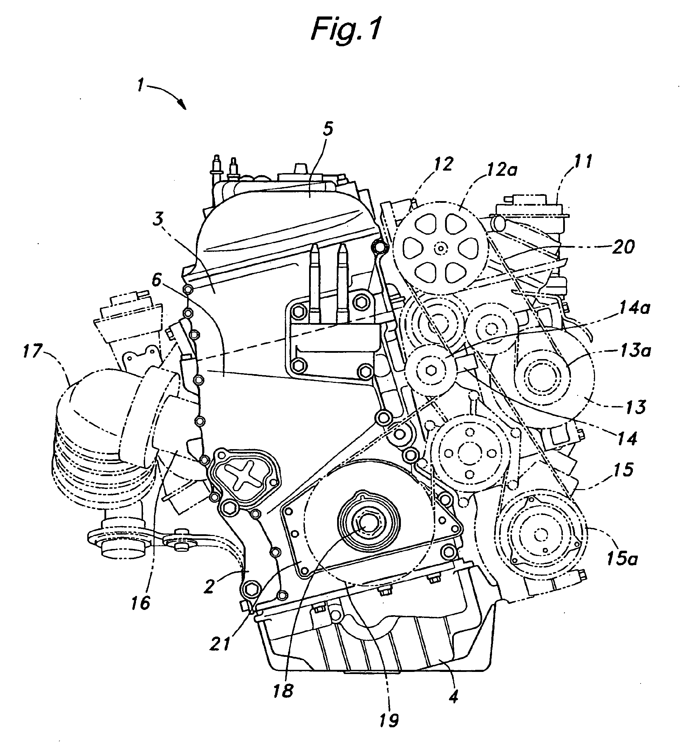

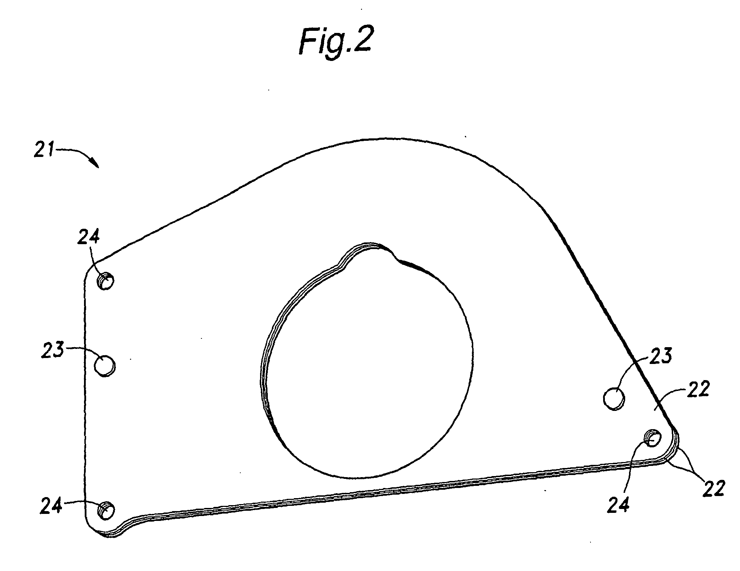

In the following, an embodiment of the present invention will be described in detail with reference to the appended drawings. Figure 1 is a front view of an engine equipped with a vibration damping member according to an embodiment of the present invention, and Figure 2 is a perspective view of the vibration damping member.

### <Engine Structure>

An engine 1 shown in Figure 1 consists of an inline four-cylinder diesel engine, and its outer shell is formed by a cylinder block 2, cylinder head 3, oil pan 4, head cover 5, cam chain cover 6, and others. The cam chain cover 6 consists of an aluminum alloy die-cast product, and is fastened to a front side of the cylinder block 2 and cylinder head 3 so as to cover a chain transmission mechanism (not shown) inclusive of a cam chain and crank sprocket.

Provided on an air-intake side of the engine 1 (i.e., right side in Figure 1) are an air-intake device 11 as well as auxiliaries such as a power steering pump 12, alternator 13, water pump 14, cooler compressor 15, etc. Further, provided on an exhaust side of the engine 1 (i.e., left side in Figure 1) are an exhaust manifold, a DPF (Diesel Particulate Filter) 17 integrally containing an oxidizing catalyst, etc. In Figure 1, the parts indicated by reference numerals 12a-15a are driven pulleys attached to the shafts of respective auxiliaries 12-15.

A crankshaft 18 is rotatably supported by the cylinder block 2, and an end portion of the crankshaft 18 passes through a lower part of the cam chain cover 6. A crank pulley 19 is attached to an end of the crankshaft 18, and the rotation of crankshaft 18 is transmitted to the auxiliaries 12-15 by a serpentine drive belt 20 engaging the crank pulley 19 with the driven pulleys 12a-15a.

### <Vibration damping member>

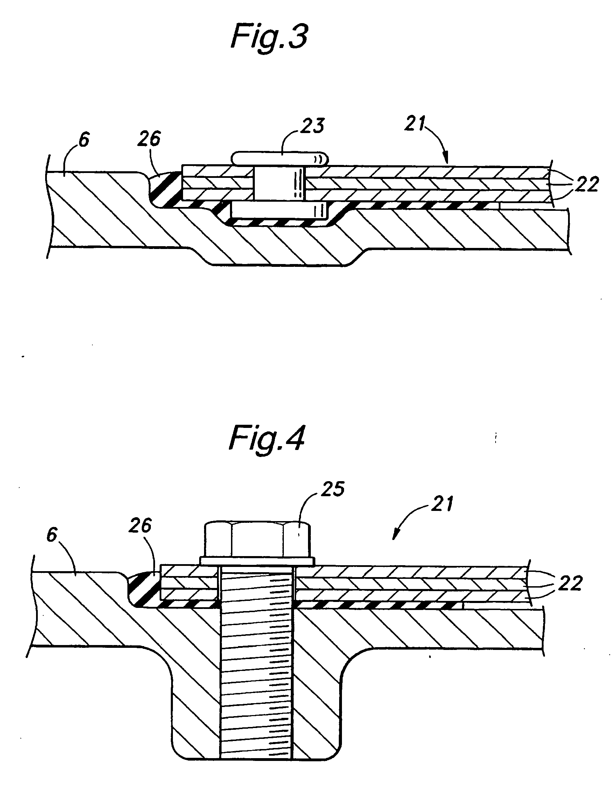

A vibration damping member 21 generally having a trapezoidal shape is secured to the front side of the cam chain cover 6 so as to surround the portion through which the crankshaft 18 passes. As shown in Figures 2 and 3, the vibration damping member 21 is formed by three relatively thin steel plates (plate members) 22 having an identical shape, where the steel plates 22 are stacked one over the other in a close contact state (i.e., adjoining ones of the steel plates 22 are in close contact to each other) and held together by left and right rivets 23 such that the adjoining steel plates 22 are pressed upon each other but can slide relative to each other as described more in detail below. In order to prevent rust for an extended period of time, each steel plate 22 is treated with phosphate and then applied with black anti-rust paint by means of cation electrodeposition coating.

The vibration damping member 21 is formed with three bolt holes 24 and, as shown in Figure 4, secured to the cam chain cover 6 by bolts 25 passed through the bolt holes 24. As shown in Figures 3 and 4, a seal member 26 made of a resin material (an FIPG (Formed In Place Gasket) in this embodiment) is applied on/interposed between joint surfaces of the cam chain cover 6 and the vibration damping member 21 to prevent bimetallic corrosion (galvanic corrosion).

### <Function of the Embodiment>

In an operation of the engine 1, the relatively thin cam chain cover 6 is applied with vibratory forces caused by interaction between the cam chain and sprocket, operation of valve gear mechanism inclusive of the camshaft and rocker arms, and/or rotations of the auxiliaries 12-15. As a result, the relatively thin cam chain cover 6 vibrates at various frequencies in varying amplitudes, and can undergo resonance in a certain frequency region to radiate relatively large sound. According to the present embodiment, however, provision of the above-structured vibration damping member 21 can effectively reduce the sound radiated from the cam chain cover 6 in a manner as described below.

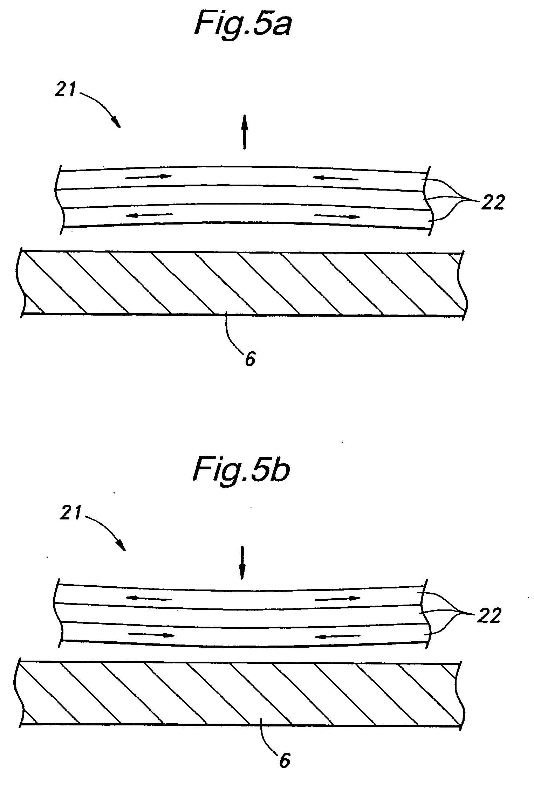

When the cam chain cover 6 vibrates, the vibration damping member 21 attached to the front side of the cover 6 also vibrates at the same frequency. Because the vibration damping member 21 comprises three steel plates 22 stacked together in a close contact state, as the vibration damping member 21 vibrates in an axial direction of the crankshaft 18 (vertical direction in Figure 5), the steel plates 22 slides relative to each other in a left and right direction (or in a direction substantially perpendicular to the stacking direction of the steel plates 22) while contacting each other with a relatively strong pressure (the sliding directions are indicated by arrows). As a result, the vibration energy is consumed by the friction between the sliding surfaces of adjoining steel plates 22 (i.e., as heat energy), whereby the vibration is reduced and the sound radiated from the cam chain cover 6 is effectively suppressed.

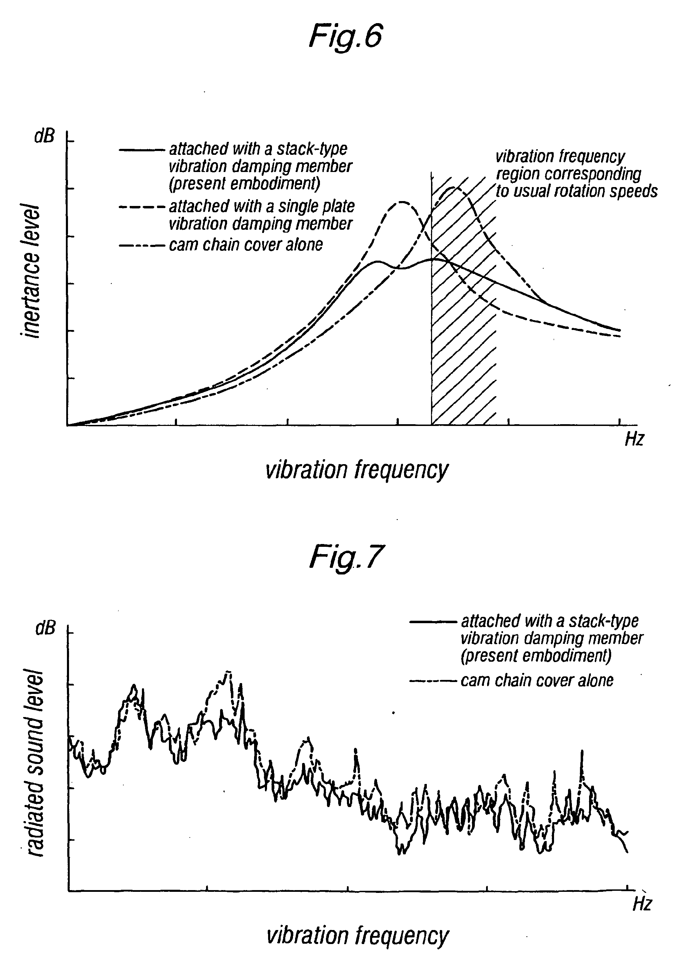

Figure 6 is a graph showing the inertance characteristics with respect to frequency when a hammering vibration excitation is applied to the cam chain cover 6. It will be appreciated from this graph that compared with the cam chain cover 6 alone (shown by two-dot chain line in Figure 6), the resonance frequency is lowered when a relatively thick, unitary (or single-plate) vibration damping member is attached (shown by broken lines in Figure 6), and an inertance level is reduced as well in this embodiment of invention (shown by solid line in Figure 6). Further, as seen in Figure 7 which is a graph showing the radiated sound level with respect to frequency, the radiated sound is significantly reduced over almost whole frequency range in the instant embodiment (solid line in Figure 7) compared with the cam chain cover 6 only (shown by two-dot chain line in Figure 7). It should be noted that in the case of the cam chain cover 6 alone, the resonance frequency exists within a vibration frequency region corresponding to a usual rotation speed range of the engine 1, and the provision of the single-plate vibration damping member lowers the resonance frequency and thus can reduce the sound radiated from the cam chain cover 6 to a certain extent.

Though an explanation was made to a concrete embodiment of the invention above, the present invention may not be limited to the above embodiment and can be altered or modified in various ways without departing from the scope of the present invention which is set forth in the appended claims. For example, the plate members were stacked one over the other in a close contact state in the above embodiment but the plate members may be stacked with a slight space between them so that the plate member surfaces collide against each other to consume the vibration energy. Further, though the vibration damping member was attached to the outer (or front) surface of the cam chain cover, the vibration damping member may be attached to an inner surface of the cam chain cover. The vibration damping member may also be attached by means of a bonding agent, adhesive, etc., instead of the bolts. It is also possible to attach the vibration damping member of the present invention to an outer or inner surface of vibrating members other than the cam chain cover, such as an oil pan, cylinder block or head cover of the engine or a transmission case, etc. Further, though in the above embodiment, a seal member was interposed between the vibration damping member and the vibrating member (cam chain cover), the vibration damping member may be attached to the vibrating member directly if there is no concern about bimetallic corrosion. The vibration damping member may contain a curved surface so as to conform to the shape of the vibrating member, and may be constituted by two plate members or more than three plate members. Yet further, the plate members constituting the vibration damping member may not be limited to steel plates but may consist of other metallic plates such as aluminum alloy plates or titanium plates, or may consist of resin plates or a combination of these metallic plates and resin plates so long as sufficient friction can be generated between the adjoining plate members.

## Claims

1. Combination of a vibration damping member (21) and a vibrating member (6) attached thereto for damping a vibration of the vibrating member (6), comprising:
a plurality of plate members (22) which are stacked one over the other in such a manner that they are relatively movable with respect to each other and are held together by rivets (23),
wherein the plurality of plate members (22) and the vibrating member (6) are made of different metallic materials,
**characterized in that**
the vibration damping member (21) is attached to the vibrating member (6) via a seal member (26) made of a resin material interposed between joint surfaces of the rivets (23) and the vibrating member (6).

2. The combination according to claim 1, wherein adjoining ones of the plurality of plate members (22) are in close contact to each other.

3. The combination according to claim 2, wherein the adjoining ones of the plurality of plate members (22) are pressed upon each other in a stacking direction.

4. The combination according to claim 1, wherein the vibrating member comprises a cam chain cover (6), and the vibration damping member is attached to the cam chain cover so as to surround a crankshaft (18) that is passed through the cam chain cover.

## Patentansprüche

1. Kombination eines Schwingungsdämpfungselements (21) und eines daran angebrachten schwingenden Elements (6) zum Dämpfen einer Schwingung des schwingenden Elements (6), umfassend:
eine Mehrzahl von Plattenelementen (22), die derart aufeinander gestapelt sind, dass sie in Bezug aufeinander relativ beweglich sind und durch Nieten (23) zusammengehalten werden,
wobei die Mehrzahl von Plattenelementen (22) und das schwingende Element (6) aus unterschiedlichen Metallmaterialien hergestellt sind, **dadurch gekennzeichnet, dass** das Schwingungsdämpfungselement (21) an dem schwingenden Element (6) über ein aus Harzmaterial hergestelltes Dichtungselement (26) angebracht ist, welches zwischen Verbindungsflächen der Nieten (23) und des schwingenden Elements (6) eingefügt ist.

2. Kombination nach Anspruch 1, worin benachbarte der Mehrzahl von Plattenelementen 22 in engem Kontakt miteinander stehen.

3. Kombination nach Anspruch 2, worin die benachbarten der Mehrzahl von Plattenelementen (22) in Stapelrichtung aufeinander gepresst sind.

4. Kombination nach Anspruch 1, worin das schwingende Element einen Nockenkettendeckel (6) aufweist, und das Schwingungsdämpfungselement an dem Nockenkettendeckel so angebracht ist, dass es eine Kurbelwelle (18) umgibt, die durch den Nockenkettendeckel hindurchtritt.

## Revendications

1. Combinaison d'un élément amortisseur de vibrations (21) et d'un élément vibratoire (6) qui y est fixé pour amortir une vibration de l'élément vibratoire (6), comprenant :
une pluralité d'éléments de plaques (22) qui sont empilés les uns par dessus les autres de telle manière qu'ils sont mobiles les uns par rapport aux autres et sont tenus ensemble par des rivets (23),
dans laquelle la pluralité d'éléments de plaques (22) et l'élément vibratoire (6) sont fabriqués en des matériaux métalliques différents,
**caractérisée en ce que**
l'élément amortisseur de vibrations (21) est fixé à l'élément vibratoire (6) par l'intermédiaire d'un élément de joint (26) fabriqué en un matériau de résine interposé entre les surfaces de jointure des rivets (23) et l'élément vibratoire (6).

2. Combinaison selon la revendication 1, dans laquelle ceux, contigus, de la pluralité d'éléments de plaques (22) se trouvent au contact étroit les uns des autres.

3. Combinaison selon la revendication 2, dans laquelle ceux, contigus, de la pluralité d'éléments de plaques (22) sont pressés les uns sur les autres suivant une direction d'empilement.

4. Combinaison selon la revendication 1, dans laquelle l'élément vibratoire se compose d'un carter de chaîne à came (6), et l'élément amortisseur de vibrations est fixé au carter de chaîne à came de manière à entourer un vilebrequin (18) qui traverse le carter de chaîne à came.
